# EUROPEAN PATENT APPLICATION

(11) **EP 4 216 336 A1**
(43) Date of publication of application: **26.07.2023**
(21) Application number: 22866077.5
(22) Date of filing: 31.03.2022
(51) Int. Cl.: H01M 10/44

(54) **LITHIUM FERRIC PHOSPHATE LITHIUM ION BATTERY CHARGE ADJUSTING METHOD**

(30) Priority: 09.09.2021 CN 202111052880
(71) Applicant: SVOLT ENERGY TECHNOLOGY CO., LTD, Changzhou, Jiangsu 213200 (CN)
(72) Inventor: GAO, Yangyang, hangzhou, Jiangsu 213200 (CN); SUN, Guangwei, hangzhou, Jiangsu 213200 (CN); WANG, Wenxiu, hangzhou, Jiangsu 213200 (CN); ZHANG, Xiangkai, hangzhou, Jiangsu 213200 (CN); HUANG, Liming, hangzhou, Jiangsu 213200 (CN)
(74) Representative: Fuchs Patentanwälte Partnerschaft mbB
(86) International application number: PCT/CN2022/084515
(87) International publication number: WO 2023/035599

(57) **Abstract**

The present disclosure provides a charge regulation method of lithium iron phosphate lithium ion battery. The method comprises the following steps: discharging step: discharging each monomeric lithium iron phosphate lithium ion battery of the lithium ion battery module to a cut-off voltage; charging step: obtaining the difference between the actual capacity C' and the rated capacity C of each monomeric lithium iron phosphate lithium ion battery, and recorded as ΔC, wherein each monomeric lithium iron phosphate lithium ion battery has the same rated capacity; charging the discharged monomeric lithium iron phosphate lithium ion batteries and controlling their charging capacity to the corresponding △C+C×*k*, wherein k is the delivery SOC of the lithium ion battery module. The present disclosure can ensure that the differential capacity of each monomeric battery after charging is the same. When each monomeric lithium iron phosphate lithium ion battery forms a module, under the same charging current and the same charging time, all batteries in the module can be fully charged, and the SOC is consistent, thus solving the problem of large battery pressure difference in the module caused by inconsistent delivery SOC.

## Description

### Technical Field

The present disclosure relates to the technical field of lithium ion batteries, in particular to a charge regulation method of lithium iron phosphate lithium ion battery.

### Background

In order to solve the environmental pollution issues caused by the use of traditional energies, the state vigorously promotes clean energies. Subsequently, lithium ion battery technology has developed rapidly. At present, lithium batteries are more and more widely used in various digital devices such as notebooks, digital cameras and digital video cameras, etc. In addition, lithium batteries also have broad prospects in automobiles, mobile base stations and energy storage power stations, etc. In this case, the use of batteries is no longer the same as in mobile phones, in which case the batteries are used alone, but is in the form of tandem or parallel modules.

The capacity and service life of the module are not only related to each monomeric battery, but also to the consistency of the state of charge (hereinafter referred to as SOC) between each battery. Poor consistency will greatly compromise the performance of the battery module. During the use of batteries with inconsistent SOC after being assembled, some batteries are fully charged, while some batteries are not fully charged. At the same time of sacrificing the battery capacity, the battery pressure difference between modules will also be large, greatly affecting the overall capacity and safety characteristics of the modules.

Lithium iron phosphate battery (referred to as LFP battery) has the characteristic of longer voltage platform, that is, there is no one-to-one correspondence between the open circuit voltage (OCV) and the state of charge (SOC). Therefore, when the battery needs to be delivered with a specific SOC, the battery cannot be charged to the specified OCV in the constant current and constant voltage mode, but can only be charged for a fixed time in the constant current mode.

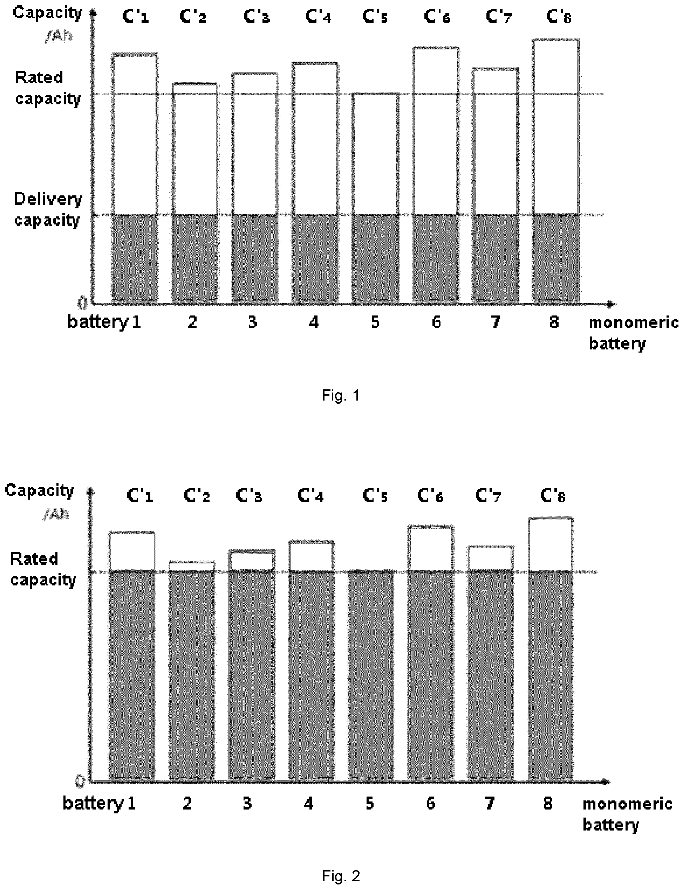

As illustrated in Figure 1, since the actual capacity of each battery is different, although the charging capacity of each battery is the same during charge regulation (Co=I×t=a×C×t, a is the charging rate, C is the rated capacity of the battery, and t is the charging time, all of which are fixed values), the state of charge (SOC) (SOC = charging capacity/actual capacity of the battery at this time) is not the same, which will cause poor consistency of the delivery SOC of the monomeric battery.

At the module end, the module charging strategy is: when any battery in the same module reaches the cut-off voltage, the charging of the whole module terminates. At this time, some batteries are fully charged, while some batteries are not fully charged. As shown in Figure 2, not only the capacity of some batteries is sacrificed, but also the battery pressure difference in the module is large, which greatly affects the overall capacity and safety characteristics of the module. Especially for lithium iron phosphate lithium ion batteries, the above problems are more prominent.

Therefore, it is necessary to provide a new charge regulation method of lithium iron phosphate lithium ion battery to solve the problems of poor overall capacity and safety of battery modules due to SOC differences in the charging process of the existing battery modules.

### Summary

The main object of the present disclosure is to provide a charge regulation method of lithium iron phosphate lithium ion battery to solve the problems of poor overall capacity and safety of battery modules due to SOC differences in the charging process of the lithium iron phosphate lithium ion battery modules in the prior art.

In order to achieve the above object, according to one aspect of the present disclosure, there is provided a charge regulation method of lithium iron phosphate lithium ion battery, which comprises the following steps: discharging each monomeric lithium iron phosphate lithium ion battery of the lithium ion battery module to a cut-off voltage; charging step: obtaining the difference between the actual capacity C' and the rated capacity C of each monomeric lithium iron phosphate lithium ion battery, and recorded as ΔC, wherein each monomeric lithium iron phosphate lithium ion battery has the same rated capacity; charging the discharged monomeric lithium iron phosphate lithium ion batteries and controlling the charging capacity at charging to the corresponding △C+C×*k*, wherein *k* is the delivery SOC of the lithium ion battery module.

Further, k is 20-60%, for example 50%.

Further, during the discharging step, the discharge rate of each monomeric lithium iron phosphate lithium ion battery is controlled to be 0.1-0.5C, for example 0.33C.

Further, during the charging step, the charging current of each monomeric lithium iron phosphate lithium ion battery is controlled to be the same.

Further, the charging current of each monomeric lithium iron phosphate lithium ion battery is a×C, wherein a is the charging rate of 0.1-0.5, for example 0.33.

Further, the cut-off voltage is 2.0-2.5V.

Further, the cut-off voltage is 2.0V or 2.5V.

By the charge regulation method of lithium iron phosphate lithium ion battery provided by the present disclosure, after discharging each monomeric lithium iron phosphate battery of the module, a certain amount of electricity is charged, which is regulated according to the difference between the actual capacity and the rated capacity of each monomeric battery itself, so that the differential capacity of each monomeric battery after charging can be ensured to be the same. As such, when each monomeric lithium iron phosphate lithium ion battery forms a module, under the same charging current and the same charging time, all batteries in the module can be fully charged, and the SOC is consistent, thus solving the problem of large battery pressure difference in the module caused by inconsistent delivery SOC.

### Brief Description of the Drawings

The accompanying drawings, which form a part of this application, are provided to further understand the present disclosure, the illustrative embodiments of the present disclosure and the description thereof are intended to explain the present disclosure and are not intended to limit thereto. In the drawings:
Figure 1 shows a schematic diagram of the state of charge of each lithium ion battery as delivery in the prior art;
Figure 2 shows a schematic diagram of the state of charge of each lithium ion battery when the battery module is fully charged in the prior art;
Figure 3 shows a schematic diagram of the state of charge of each monomeric lithium iron phosphate lithium ion battery as delivery in the current application;
Figure 4 shows a schematic diagram of the state of charge of each monomeric lithium iron phosphate lithium ion battery when the battery module is fully charged in the current application.

### Detailed Description of the Embodiments

It should be noted that the Examples in the present application and the features in the Examples may be combined with each other without conflicting. Hereinafter, the present disclosure will be described in detail with reference to the drawings and in conjunction with the Examples.

### Explanation of Terms:

Actual capacity: the actual discharge capacity of the cell measured under specified conditions;
Rated capacity: the capacity value of a monomeric cell measured under specified conditions and declared by the manufacturer. The rated capacity is usually expressed in ampere-hour (Ah) or milliampere-hour (mAh).

Delivery SOC: SOC is the abbreviation of the state of charge of the battery. Delivery SOC is the state of charge of the battery at the time of delivery (or ex factory). The percentage of the capacity that can be released according to the discharge conditions specified by the manufacturer in current monomeric cell in the actual capacity at the time of delivery.

Differential capacity: full capacity - charged capacity.

As described in the background section, the overall capacity and safety of battery modules due to SOC differences in the charging process of the lithium iron phosphate lithium ion battery modules in the prior art are poor. In order to solve this problem, the inventors of the present disclosure, according to the characteristics of long voltage platform of lithium iron phosphate battery, proposed a technical solution by compensating the capacity difference of each monomeric battery, thereby solving the above problem.

Specifically, the present disclosure provides a charge regulation method of lithium iron phosphate lithium ion battery, which comprises the following steps: discharging each monomeric lithium iron phosphate lithium ion battery of the lithium ion battery module to a cut-off voltage; charging step: obtaining the difference between the actual capacity C' and the rated capacity C of each monomeric lithium iron phosphate lithium ion battery, and recorded as ΔC, wherein each monomeric lithium iron phosphate lithium ion battery has the same rated capacity; charging the discharged monomeric lithium iron phosphate lithium ion batteries and controlling the charging capacity at charging to the corresponding △C+C×*k*, wherein k is the delivery SOC of the lithium ion battery module.

By the charge regulation method of lithium iron phosphate lithium ion battery provided by the present disclosure, after discharging each monomeric lithium iron phosphate battery of the module, a certain amount of electricity is charged, which is regulated according to the difference between the actual capacity and the rated capacity of each monomeric battery itself, so that the differential capacity of each monomeric battery after charging can be ensured to be the same. As such, when each monomeric lithium iron phosphate lithium ion battery forms a module, under the same charging current and the same charging time, all batteries in the module can be fully charged, and the SOC is consistent, thus solving the problem of large battery pressure difference in the module caused by inconsistent delivery SOC.

During the actual operation, the charge of each monomeric lithium iron phosphate lithium ion battery is adjusted according to the following steps: first, discharging each monomeric battery to the cut-off voltage, and then, charging each monomeric battery to its own cut-off conditions, wherein the cut-off conditions are as follows:
Considering that the output current of each channel cannot be strictly consistent or fluctuate slightly, in order to ensure the accuracy of the above charging capacity, the system automatically calculates and sets the cut-off capacity according to the actual discharge capacity of each battery. The specific setting formula is as follows:
Charging capacity = actual capacity C' - rated capacity C × (1 - delivery SOC) = △C+C×*k*. If each monomeric battery in the module is numbered 1, 2, 3... n, and n is the total number of the monomeric batteries, the charging capacity Co of each monomeric battery is:
   Battery 1: Co₁=C'₁-C×(1-delivery SOC)=△C₁+C×*k*
   Battery 2: Co₂=C'₂-C×(1-delivery SOC)=△C₂+C×*k*
   Battery 3: Co₃=C'₃-C×(1-delivery SOC)=△C₃+C×*k*
   Battery 8: Co₈=C'₈-C×(1-delivery SOC)=△C₈+C×*k*
   Battery n: Coₙ=C'ₙ-C×(1-delivery SOC)=△Cₙ+C×*k*

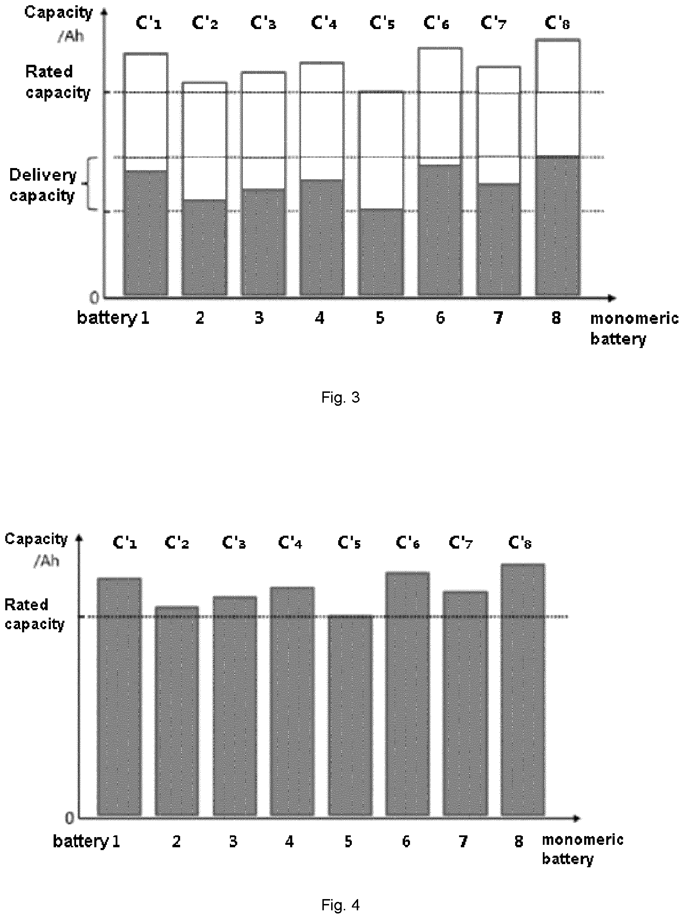

The schematic diagram of the specific state of charge of each monomeric lithium iron phosphate lithium ion battery as delivery is shown in Figure 3.

Upon charging as described above, the capacity (differential capacity) to be charged for each monomeric battery is as follows when each monomeric battery is assembled into a module:
Battery 1: Cm₁=C'₁-Co₁= C×(1-delivery SOC)=C×(1-*k*)
Battery 2: Cm₂=C'₂-Co₂= C×(1-delivery SOC)=C×(1-*k*)
Battery 3: Cm₃=C'₃-Co₃= C×(1-delivery SOC)=C×(1-*k*)
Battery 8: Cm₈=C'₈-Co₈= C×(1-delivery SOC)=C×(1-*k*)
Battery n: Cmₙ=C'ₙ-Coₙ= C×(1-delivery SOC)=C×(1-*k*)

Wherein: C' is the actual capacity of the battery, and Cm is the capacity (differential capacity) to be charged when each monomeric battery is assembled into a module in the actual application.

It is obvious that Cm₁=Cm₂=Cm₃=...=Cm₇=Cm₈, that is, each battery in the module needs to be charged with the same capacity. Under the same charging current and the same charging time, all batteries in the module can be fully charged (see Figure 4 for the schematic diagram of the state of charge of each monomeric lithium iron phosphate lithium ion battery when the battery module is fully charged), and the SOC is consistent, thus solving the problem of large battery pressure difference in the module due to the inconsistent delivery SOC.

The above k is the delivery SOC, which is usually set according to customers' requirements, generally 20-60%, for example 50%.

In order to improve the discharge efficiency, in a preferred embodiment, during the above discharge step, the discharge rate of each monomeric lithium iron phosphate lithium ion battery is controlled to be 0.1-0.5C (C is the same as described above, rated capacity), for example 0.33C.

In a preferred embodiment, during the above charging step, the charging current of each monomeric lithium iron phosphate lithium ion battery is controlled to be the same. This ensures better reliability, thus further ensuring that each monomeric battery has the same differential capacity after charging, and better SOC consistency. Preferably, the charging current of each monomeric lithium iron phosphate lithium ion battery is a×C (C is the same as described above, rated capacity), wherein a is the charging rate of 0.1-0.5, for example 0.33.

The above cut-off voltage is preferably 2.0-2.5V, for example 2.0V or 2.5V.

The present application will be described in further detail below in combination with specific examples, which cannot be understood as limiting the protection scope claimed by the present application.

By way of example, the following Example 1 and Comparative Example 1 both used the lithium iron phosphate system CL01 cell produced by SVOLT Energy Technology Co., Ltd., the rated capacity was 184Ah, and the delivery state of the monomeric cell end was 50%SOC; the module was composed of components such as 32 cells, BMS, cooling system, etc., with a rated capacity of 184Ah. After charging to 3.65V at a rate of 0.33C, it was discharged to 2.0V at a rate of 0.33C and the actual capacity of each monomeric battery was 184-191Ah;
Table 1 below shows the actual capacity of a monomeric cell of a certain module:

**Table 1: Actual capacity of a monomeric cell (Ah)**

| | | | | | | | |
|---|---|---|---|---|---|---|---|
| 187.451 | 187.476 | 187.427 | 187.516 | 187.481 | 187.870 | 187.652 | 187.812 |
| 187.847 | 188.745 | 189.430 | 189.554 | 189.579 | 189.731 | 189.655 | 189.681 |
| 187.812 | 187.634 | 187.802 | 187.791 | 187.644 | 187.535 | 187.748 | 187.447 |
| 187.983 | 187.427 | 187.486 | 188.123 | 187.779 | 187.680 | 187.535 | 188.011 |

### Comparative example 1

Traditional process: after the cell was discharged, it was charged at a constant rate for a constant time and the charge was adjusted to the delivery state. The capacity of each monomeric cell as delivery is shown in Table 2 below:

**Table 2: Capacity of monomeric cell as delivery (Ah)**

| | | | | | | | |
|---|---|---|---|---|---|---|---|
| 92 | 92 | 92 | 92 | 92 | 92 | 92 | 92 |
| 92 | 92 | 92 | 92 | 92 | 92 | 92 | 92 |
| 92 | 92 | 92 | 92 | 92 | 92 | 92 | 92 |
| 92 | 92 | 92 | 92 | 92 | 92 | 92 | 92 |

After the batch of cells arrived at the module end, the amount of electricity to be charged = the actual capacity of cells in Table 1 - the charged capacity in Table 2. The specific data are shown in Table 3 below:

**Table 3: Capacity needed to be charged when the cell of module end was fully charged (Ah)**

| | | | | | | | |
|---|---|---|---|---|---|---|---|
| 95.451 | 95.476 | 95.427 | 95.516 | 95.481 | 95.870 | 95.652 | 95.812 |
| 95.847 | 96.745 | 97.430 | 97.554 | 97.579 | 97.731 | 97.655 | 97.681 |
| 95.812 | 95.634 | 95.802 | 95.791 | 95.644 | 95.535 | 95.748 | 95.447 |
| 95.983 | 95.427 | 95.486 | 96.123 | 95.779 | 95.680 | 95.535 | 96.011 |

Since all the cells in the module were in series, when any one of the cells was fully charged, the charging of the whole module stopped. According to the above charging strategy, only the battery cell with the lowest capacity (95.427) in the above Table was fully charged, and other batteries were not fully charged, causing inconsistent state of charge of the battery cells in the module, thus large battery pressure difference in the module.

### Example 1

According to the process of the disclosure: after the discharge of the cell was completed (discharge rate 0.33C, cut-off voltage 2.0V), the charging capacity = actual capacity C' - rated capacity C × (1-delivery SOC), the delivery SOC was 50%, and the actual charge of the cell is shown in Table 4 below:

**Table 4 Capacity of monomeric cell as delivery (Ah)**

| | | | | | | | |
|---|---|---|---|---|---|---|---|
| 95.451 | 95.476 | 95.427 | 95.516 | 95.481 | 95.870 | 95.652 | 95.812 |
| 95.847 | 96.745 | 97.430 | 97.554 | 97.579 | 97.731 | 97.655 | 97.681 |
| 95.812 | 95.634 | 95.802 | 95.791 | 95.644 | 95.535 | 95.748 | 95.447 |
| 95.983 | 95.427 | 95.486 | 96.123 | 95.779 | 95.680 | 95.535 | 96.011 |

After the batch of cells arrived at the module end, the amount of electricity to be charged = the actual capacity of cells in Table 1 - the charged capacity in Table 4 with a charging rate of 0.33C. The specific data are shown in Table 5 below:

**Table 5: Capacity needed to be charged when the cell of module end was fully charged (Ah)**

| | | | | | | | |
|---|---|---|---|---|---|---|---|
| 92.000 | 92.000 | 92.000 | 92.000 | 92.000 | 92.000 | 92.000 | 92.000 |
| 92.000 | 92.000 | 92.000 | 92.000 | 92.000 | 92.000 | 92.000 | 92.000 |
| 92.000 | 92.000 | 92.000 | 92.000 | 92.000 | 92.000 | 92.000 | 92.000 |
| 92.000 | 92.000 | 92.000 | 92.000 | 92.000 | 92.000 | 92.000 | 92.000 |

Obviously, since the charging capacity required for full charge is the same, all the cells in the module can be fully charged at the same time, which effectively avoids the problem of large battery voltage difference in the module due to inconsistent state of charge of the cells in the module.

The above description is only the preferred examples of the present disclosure, and is not intended to limit the present disclosure, various modifications and changes can be made to the present disclosure for those skilled in the art. Any modifications, equivalent substitutions, improvements, and the like made within the spirit and principle of the present disclosure shall be included into the scope of protection of the present disclosure.

## Claims

1. A charge regulation method of lithium iron phosphate lithium ion battery, comprising the following steps:
discharging step: discharging each monomeric lithium iron phosphate lithium ion battery of the lithium ion battery module to a cut-off voltage;
charging step: obtaining the difference between the actual capacity C' and the rated capacity C of each monomeric lithium iron phosphate lithium ion battery, and recorded as ΔC, wherein each monomeric lithium iron phosphate lithium ion battery has the same rated capacity; charging the discharged monomeric lithium iron phosphate lithium ion batteries and controlling the charging capacity at charging to the corresponding △C+C×*k*, wherein k is the delivery SOC of the lithium ion battery module.

2. The method according to claim 1, wherein k is 20-60%.

3. The method according to claim 1, wherein k is 50%.

4. The method according to claim 1, wherein during the discharging step, the discharge rate of each monomeric lithium iron phosphate lithium ion battery is controlled to be 0.1-0.5C.

5. The method according to claim 1, wherein during the discharging step, the discharge rate of each monomeric lithium iron phosphate lithium ion battery is controlled to be 0.33C.

6. The method according to any one of claims 1-5, wherein during the charging step, the charging current of each monomeric lithium iron phosphate lithium ion battery is controlled to be the same.

7. The method according to claim 6, wherein the charging current of each monomeric lithium iron phosphate lithium ion battery is a×C, wherein a is the charging rate of 0.1-0.5.

8. The method according to claim 6, wherein the charging current of each monomeric lithium iron phosphate lithium ion battery is a×C, where a is the charging rate of 0.33.

9. The method according to any one of claims 1-5, wherein the cut-off voltage is 2.0-2.5V.

10. The method according to claim 9, wherein the cut-off voltage is 2.0V or 2.5V.
